# EUROPEAN PATENT APPLICATION

(11) **EP 2 874 199 A1**
(43) Date of publication of application: **20.05.2015**
(21) Application number: 14755576.7
(22) Date of filing: 15.04.2014
(51) Int. Cl.: H01M 2/02, H01M 2/04, H01M 2/08

(54) **METHOD FOR MANUFACTURING PRISMATIC BATTERY CASE**

(30) Priority: 27.09.2013 KR 20130114943
(71) Applicant: LG Chem, Ltd., Seoul 150-721 (KR)
(72) Inventor: HAN, Hyung Seok, Daejeon 305-738 (KR); NAM, Sang Bong, Daejeon 305-738 (KR); LEE, Hyang Mok, Daejeon 305-738 (KR); JANG, Wook Hee, Daejeon 305-738 (KR); JUNG, Sang Sok, Daejeon 305-738 (KR)
(74) Representative: Cabinet Plasseraud
(86) International application number: PCT/KR2014/003256
(87) International publication number: WO 2015/046696

(57) **Abstract**

Provided are extruding a raw material into a prismatic hollow material having both open ends (Step (a)), drawing the hollow material a plurality of times so as to have a desired thickness (Step (b)), manufacturing a main body by cutting the drawn hollow material to a predetermined length (Step (c)), forming a sealing cover having a shape corresponding to an open end of the main body (Step (d)), and adhering the sealing cover to the open end of the main body (Step (e)). A main body of a prismatic type battery case is manufactured through an extrusion process and a plurality of drawing processes, so that the main body has a desired thickness, and a crack is prevented from being formed therein, thereby decreasing a defect rate. A heat treatment is performed on a hollow material after each drawing process, so as to decrease the hardness and strength of the hollow material and improve formability thereof, thereby preventing a defect from occurring in a subsequent drawing process. A leakage prevention recess and a leakage prevention protrusion are formed on a main body and a sealing cover, thereby preventing electrolyte from leaking out of a battery case.

## Description

### TECHNICAL FIELD

The present invention relates to a method of manufacturing a prismatic type battery case, and more particularly, to a method of manufacturing a prismatic type battery case in which a main body of the prismatic type battery case is manufactured through an extrusion process and a plurality of drawing processes, so that the main body has a desired thickness, and a crack is prevented from being formed in the main body, thereby decreasing a defect rate.

### BACKGROUND ART

As mobile devices are technically developed and are in increasing demand, demands for a secondary battery as an energy source quickly increase. In particular, lithium secondary batteries having high energy density and discharge voltage are actively researched and widely commercialized.

Secondary batteries are classified into cylindrical or prismatic type batteries, which include a jelly-roll structure in a cylindrical or prismatic metal can, and pouch type batteries which include a jelly-roll structure in a pouch type case of an aluminum laminate sheet, according to the shapes of battery cases.

Electrode assemblies accommodated in battery cases are rechargeable generating devices having a stacked structure of a cathode, a separator, and an anode, and are classified into folding type electrode assemblies (jelly-roll structures) which are formed by winding an active material-coated long sheet type cathode and an active material-coated long sheet type anode with a separator therebetween, and stacked type electrode assemblies which are formed by sequentially stacking a plurality of cathodes having a predetermined size and a plurality of anodes having a predetermined size with separators therebetween. Of these, the jelly-roll structures are easy to manufacture and have high energy density per weight.

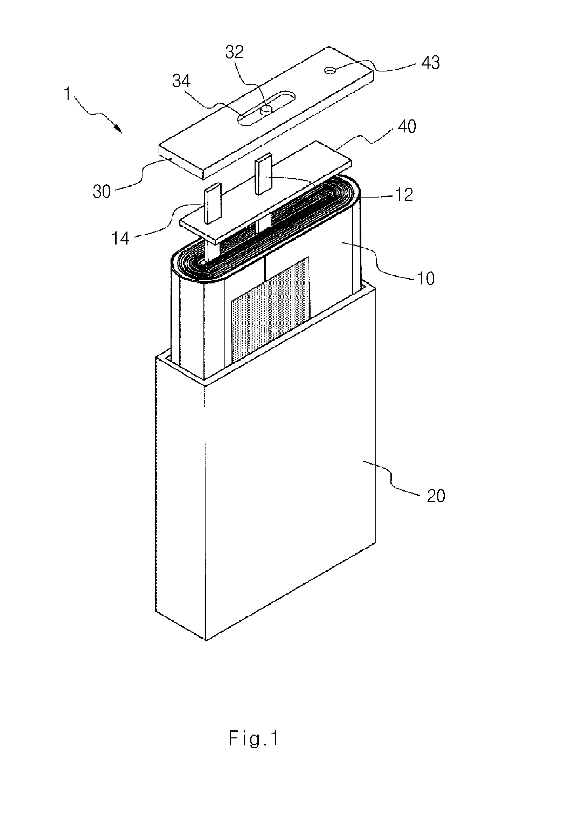

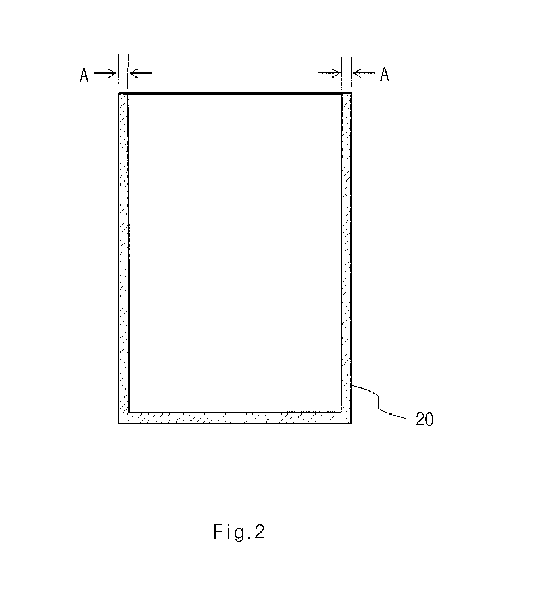

FIG. 1 is an exploded perspective view illustrating a prismatic type battery including the above-described jelly-roll structure. FIG. 2 is a vertical cross-sectional view illustrating the battery case of FIG. 1.

Referring to FIG. 1, a prismatic type battery 1 includes a jelly-roll structure 10 accommodated in a prismatic case 20, and a top cap 30 provided with a protruding electrode terminal and coupled to an open upper end of the case 20.

An anode of the jelly-roll structure 10 is electrically connected through an anode tab 12 to a lower end of an anode terminal 32 disposed on the top cap 30, and the anode terminal 32 is electrically insulated from the top cap 30 by an insulating member 34. A cathode tab 14 for the other electrode of the jelly-roll structure 10 is electrically connected to the top cap 30 formed of a conductive material such as aluminum or stainless steel. Thus, the top cap 30 functions as a cathode terminal.

A sheet type insulating member 40 is inserted between the prismatic case 20 and the jelly-roll structure 10 to electrically insulate the jelly-roll structure 10 and the top cap 30 from each other, except for the anode tab 12 and the cathode tab 14, then, the top cap 30 is installed thereon, and then, a welding process is performed along contact surfaces of the top cap 30 and the prismatic case 20 to couple the top cap 30 and the prismatic case 20 to each other. After that, electrolyte is injected through an electrolyte injection hole 43, then, a metal ball (not shown) is welded to the electrolyte injection hole 43 to seal the electrolyte injection hole 43, and then, epoxy is applied to a welded area to complete the prismatic type battery.

In general, a secondary battery case configured as described above is manufactured using a multi-stage deep drawing method, and side walls of the prismatic case 20 have the same thickness (A = A') as illustrated in FIG. 2. The multi-stage deep drawing method is a manufacturing method using a series of continuous processes from a plate to a final hollow case, so as to have high process efficiency, but has the following limitations. First, since the multi-stage deep drawing method has approximately ten or more complicated and precise processes, manufacturing costs of devices for the processes are significantly high. Secondly, since the types of materials appropriate for a deep drawing process are significantly limited, it is difficult to obtain a battery case having desired material property.

To address the limitations in manufacturing a prismatic type battery case according to the multi-stage deep drawing method, a prismatic hollow main body is manufactured through a extrusion shaping process, then, a sealing member tightly contacting a lower end of the prismatic hollow main body is manufactured through a forging, blanking, or cutting process, and then, the prismatic hollow main body and the sealing member are welded to each other, thereby manufacturing a prismatic type hollow battery case having a sealed lower end.

However, a minimal thickness of the prismatic hollow main body manufactured in the extrusion shaping process is limited to a range from 0.7 to 0.8 mm. However, existing battery cases are required to have a thickness ranging from about 0.3 to 0.5 mm. Thus, the extrusion shaping process fails to meet the thickness of the existing battery cases.

To address this limitation, Korean Patent Registration No. 1182643 (cited document) relates to a technology of manufacturing a battery case through an extrusion shaping process and a drawing shaping process, in which: a raw material is shaped into a hollow extruded material through the extrusion shaping process; the hollow extruded material is shaped into a battery case main body having a required thickness through the drawing shaping process; a separate sealing member is manufactured; and the battery case main body and the separate sealing member are adhered to each other, thereby manufacturing the battery case.

In this case, since the hollow extruded material has the required thickness through a single drawing process, the shape of the hollow extruded material is severely changed, so as to increase a defect rate, such as a crack of the battery case main body.

In addition, since the battery case main body and the sealing member are adhered to each other simply through ultrasonic brazing, when a welding defect occurs, electrolyte may leak through a defective area.

### <Cited document>

[Patent Document 1] Korean Patent Registration No. 1182643

### DISCLOSURE OF THE INVENTION

### TECHNICAL PROBLEM

Accordingly, the present invention aims at providing a method of manufacturing a prismatic type battery case in which a main body of the prismatic type battery case is manufactured through an extrusion process and a plurality of drawing processes, so that the main body has a desired thickness, and a crack is prevented from being formed therein, thereby decreasing a defect rate.

### TECHNICAL SOLUTION

According to an aspect of the present invention, there is provided a method of manufacturing a prismatic type battery case, including: extruding a raw material into a prismatic hollow material having both open ends (Step (a)); drawing the hollow material a plurality of times so as to have a desired thickness (Step (b)); manufacturing a main body by cutting the drawn hollow material to a predetermined length (Step (c)); forming a sealing cover having a shape corresponding to an open end of the main body (Step (d)); and adhering the sealing cover to the open end of the main body (Step (e)).

Step (e) may be performed through laser welding.

In Step (b), a change in thickness of the hollow material in each of drawing processes may range from 15% to 25%.

The method may further include performing a heat treatment on the drawn hollow material after each of drawing processes in Step (b) (Step (b')).

Step (b') may not be performed after the final drawing process of the drawing processes.

The heat treatment on the drawn hollow material in Step (b') may be performed through annealing.

The method may further include: forming a leakage prevention recess in the open end of the main body after Step (c) (Step (c')); and forming a protruding part and a leakage prevention protrusion after Step (d) (Step (d')), wherein the protruding part is introduced from the sealing cover into the open end of the main body, and the leakage prevention protrusion is formed on a side surface of the protruding part.

The method may further include inserting the leakage prevention protrusion into the leakage prevention recess by introducing the protruding part of the sealing cover into the main body before Step (e) (Step (e')).

The method may further include forming an adhesion recess in the open end of the main body after Step (c) (Step (c")), wherein the sealing cover is inserted into the adhesion recess of the main body and is then adhered to the open end of the main body in Step (e).

The main body and the sealing cover may be formed of any one selected from aluminum (Al), copper (Cu), iron (Fe), stainless steel (SUS), a ceramic, a polymer, and an equivalent thereof.

A prismatic type battery case may be manufactured using the steps according to the present invention.

### ADVANTAGEOUS EFFECTS

According to the present invention, the following effects can be attained.

First, a main body of a prismatic type battery case is manufactured through an extrusion process and a plurality of drawing processes, so that the main body has a desired thickness, and a crack is prevented from being formed therein, thereby decreasing a defect rate.

Secondly, a heat treatment is performed on a hollow material after each drawing process, so as to decrease the hardness and strength of the hollow material and improve formability thereof, thereby preventing a defect from occurring in a subsequent drawing process.

Thirdly, a leakage prevention recess and a leakage prevention protrusion are formed on a main body and a sealing cover, thereby preventing electrolyte from leaking out of a battery case.

### BRIEF DESCRIPTION OF THE DRAWINGS

FIG. 1 is an exploded perspective view illustrating a prismatic type battery including a jelly-roll structure;
FIG. 2 is a vertical cross-sectional view illustrating the prismatic type battery case of FIG. 1;
FIG. 3 is a flowchart illustrating a method of manufacturing a prismatic type battery case according to an embodiment of the present invention; and
FIGS. 4A to 5B are views illustrating various shapes of a main body and a sealing cover, manufactured using a method of manufacturing a prismatic type battery case, and adhesion states therebetween according to embodiments of the present invention.

### MODE FOR CARRYING OUT THE INVENTION

Terms used in the following description and scopes of claims are not limited to terms that have been in commonly used dictionaries, and should be interpreted as having a meaning that is consistent with their meaning in the context of the relevant art, so that this disclosure will be thorough and complete, and will fully convey the scope of the inventive concept to those skilled in the art.

Therefore, the embodiments and drawings proposed herein are just preferable examples for the purpose of illustrations only, not intended to limit the scope of the invention, so it should be understood that other equivalents and modifications could be made thereto without departing from the spirit and scope of the invention. Moreover, detailed descriptions related to well-known functions or configurations will be ruled out in order not to unnecessarily obscure subject matters of the present invention.

Hereinafter, a method of manufacturing a prismatic type battery case according to preferred embodiments of the present invention will be described with reference to the accompanying drawings.

A method of manufacturing a prismatic type battery case according to an embodiment of the present invention includes: a step of individually manufacturing a main body that is hollow and has a prismatic shape with both open ends, and a sealing cover having a shape corresponding to an open end of the main body; and a step of coupling and adhering the main body and the sealing cover to each other. The term "prismatic" is used herein in order to comprehensively express that a cross section of a case includes a straight part, instead of a curved part such as a circular or oval shape. For example, the cross section may have a triangular shape, a tetragonal shape, a pentagonal shape, or a rectangular shape with a pair of sides (long sides) longer than the other corresponding pair of sides (short sides). Furthermore, the cross section may have a round corner part where two straight parts meet each other.

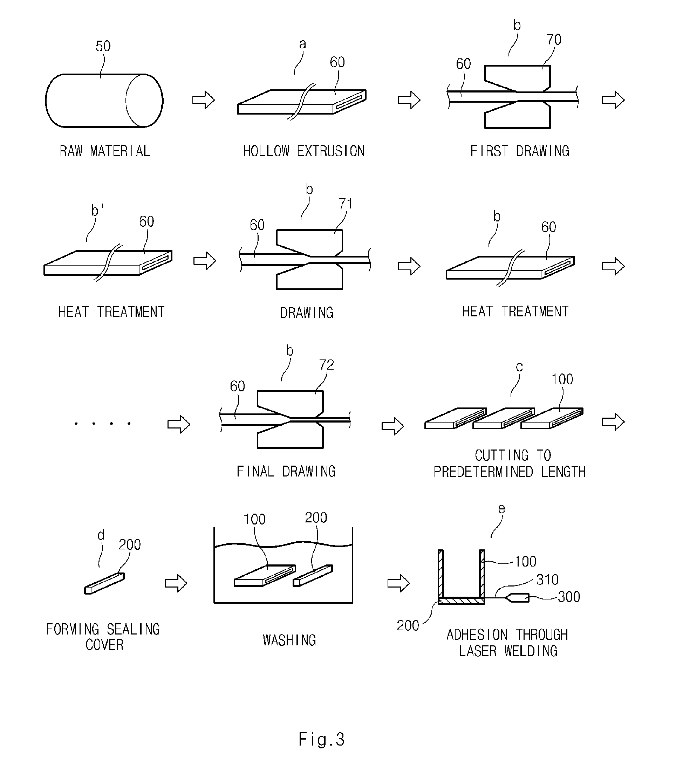

FIG. 3 is a flowchart illustrating a method of manufacturing a prismatic type battery case according to an embodiment of the present invention.

Referring to FIG. 3, a method of manufacturing a prismatic type battery case includes a step (a) of extruding a raw material 50 into a prismatic hollow material 60 having both open ends, a step (b) of drawing the hollow material 60 a plurality of times so as to have a desired thickness, a step (c) of manufacturing a main body 100 by cutting the drawn hollow material 60 to a predetermined length, a step (d) of forming a sealing cover 200 having a shape corresponding to an open end of the main body 100, and a step (e) of adhering the sealing cover 200 to the open end of the main body 100.

In the step (a), the raw material 50 is shaped into the hollow material 60 through an extrusion process.

To this end, the raw material 50 is pressed against a mold having a cavity corresponding to the shape of the hollow material 60 and is extruded. The raw material 50 may be formed of any one selected from aluminum (Al), copper (Cu), iron (Fe), stainless steel (SUS), a ceramic, a polymer, and an equivalent thereof, which are appropriate for the extrusion process, but the present invention is not limited thereto. An extruding device performing the step (a) is a commonly used well-known device in the related art, and thus, a detailed description thereof will be omitted.

In the step (b), the extruded hollow material 60 is drawn a plurality of times.

A typical drawing process is used to pass a raw material through dies having a smaller cross-sectional area than that of the raw material and draw the raw material, thereby obtaining a product having the same cross-section as that of the dies.

Also in the step (b), dies 70 are prepared and the hollow material 60 is passed between the dies 70, and thus, the thickness of the hollow material 60 is decreased. In the step (b), the thickness of the hollow material 60 reaches the desired thickness by performing the drawing process a plurality of times. Since the thickness of the hollow material 60 should be decreased as a plurality of drawing processes are performed, respective sets of dies 70, 71, and 72 of the drawing processes are gradually decreased in inner dimension.

As described above, since the thickness of the hollow material 60 reaches the desired thickness by drawing the hollow material 60 a plurality of times in the step (b), a variation in the thickness of the hollow material 60 is not large in one drawing process. Since the thickness of the hollow material 60 reaches the desired thickness through a single drawing process in the related art, the shape of the hollow material 60 is significantly changed to frequently form a crack therein, which increases a defect rate. However, according to the present invention, the thickness of the hollow material 60 reaches the desired thickness through the drawing processes, not through a single drawing process. Thus, a change in the shape of the hollow material 60 is not significant in one drawing process, so as to prevent a crack from being formed therein.

A change in the thickness of the hollow material 60 in each drawing process of the step (b) is limited within a range from 15% to 25%. If the change in the thickness of the hollow material 60 in one drawing process exceeds 25%, the possibility that a crack is formed in the hollow material 60 increases according to the change. Thus, the change in the thickness of the hollow material 60 in each drawing process may be 25% or less. If the change in the thickness of the hollow material 60 in one drawing process is smaller than 15%, a crack is not formed in the hollow material 60. However, a plurality of additional drawing processes are required, which increases die manufacturing costs, thereby increasing the total manufacturing cost. Thus, the change in the thickness of the hollow material 60 in each drawing process may range from 15% to 25%.

The present invention further includes a step (b') of performing a heat treatment on the hollow material 60 after each drawing process of the step (b).

Typical heat treatments improve characteristics of a material by performing heating and cooling processes at appropriate speed and include quenching, tempering, and annealing.

The annealing appropriately heats a metal material to remove effect caused by a process and thermal history remaining in an inner structure of the metal material, and is a heat treatment method in which a material such as a metal is heated to a predetermined temperature and is slowly cooled to correct inner deformation of the material. The annealing decreases the hardness and strength of a material and improves formability thereof to obtain a predetermined structure. Thus, the heat treatment of the step (b') may be the annealing.

That is, the heat treatment is performed by annealing the hollow material 60 in the step (b') after each drawing process, so as to improve formability thereof, thereby improving drawing formability in a subsequent drawing process.

The heat treatment of the step (b') may not be performed after the final drawing process of the drawing processes of the step (b). Accordingly, mechanical property of the hollow material 60 obtained through the final drawing process is ensured.

In the step (c), the hollow material 60 drawn through the drawing processes is cut.

In the step (c), the hollow material 60 is cut to the predetermined length by a separate cutting device (not shown). The predetermined length corresponds to the length of a desired product and may be changed according to the types of products. That is, the hollow material 60 having the desired thickness through the drawing processes is cut to the predetermined length by the cutting device, so as to manufacture the main body 100. The cutting device for cutting the hollow material 60 is commonly used and well known in the related art, and thus, a detailed description thereof will be omitted.

In the step (d), the sealing cover 200 is formed.

A press process is performed on the raw material 50 into the sealing cover 200 having the shape corresponding to the open end of the main body 100. The sealing cover 200 may be manufactured through the press process, but the present invention is not limited thereto. Thus, the sealing cover 200 may be manufactured through one of various processes such as a cutting process and a forging process.

The main body 100 and the sealing cover 200, manufactured as described above, are washed with a wash liquid. Then, the step (e) of adhering the sealing cover 200 to the open end of the main body 100 is performed.

In the step (e), the sealing cover 200 is brought into contact with the open end of the main body 100 and is then irradiated with a laser beam 310 from a laser welder 300, whereby contact surfaces of the main body 100 and the sealing cover 200 are welded to each other. The shape of an adhesion surface, where the main body 100 and the sealing cover 200 are adhered to each other, may be variously changed.

Hereinafter, steps of forming the adhesion surface, where the main body 100 and the sealing cover 200 are adhered to each other, and various shapes of the adhesion surface formed through processes will be described in detail according to exemplary embodiments.

### <First embodiment for adhesion surface>

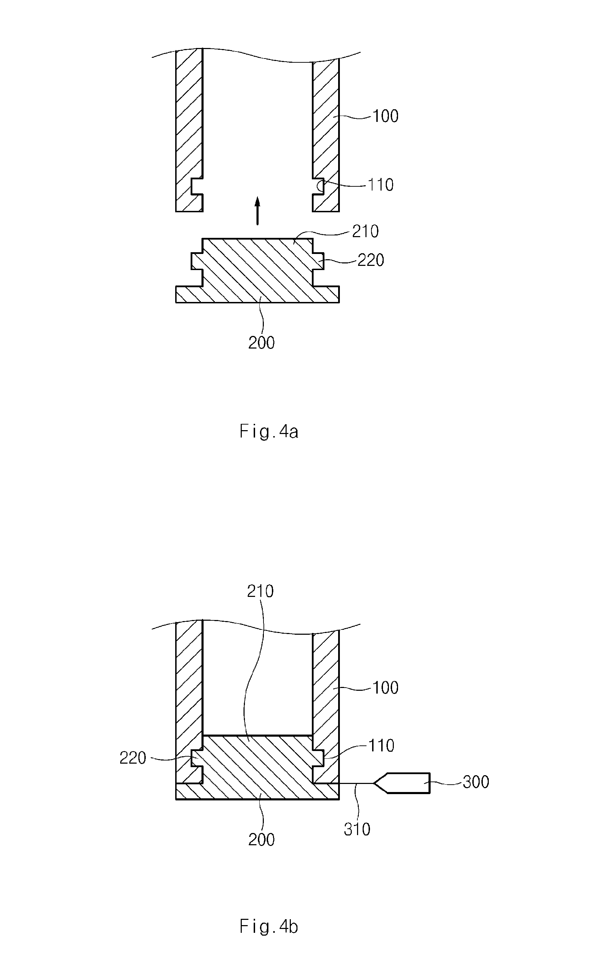

Referring to FIG. 4A, a step (c') of forming a leakage prevention recess 110 in the main body 100 is provided after the step (c). The leakage prevention recess 110 is formed inside of the open end of the main body 100 by using a method such as a cutting process.

After the step (d), a step (d') of forming a protruding part 210 and a leakage prevention protrusion 220 on the sealing cover 200 is further provided. The protruding part 210 has a shape corresponding to an inner hollow of the main body 100, and the leakage prevention protrusion 220 protrudes into a shape corresponding to the leakage prevention recess 110 in the lateral direction of the protruding part 210. The protruding part 210 and the leakage prevention protrusion 220 may be formed through a cutting process or a forging process, but the present invention is not limited thereto.

When the leakage prevention recess 110 is formed in the main body 100, and the protruding part 210 and the leakage prevention protrusion 220 are formed on the sealing cover 200 as described above, a step (e') of introducing the protruding part 210 of the sealing cover 200 into a hollow part of the main body 100 is performed before the step (e). The leakage prevention protrusion 220 is inserted in and coupled to the leakage prevention recess 110 of the main body 100 by introducing the protruding part 210 into the hollow part of the main body 100 as described above (refer to FIG. 4B).

After that, as illustrated in FIG. 4B, the step (e) of adhering the main body 100 and the sealing cover 200 to each other by emitting the laser beam 310 between the main body 100 and the sealing cover 200 from the laser welder 300 is performed.

When the main body 100 and the sealing cover 200 are adhered to each other as described above, the adhesion surface of the main body 100 and the sealing cover 200, provided by the leakage prevention recess 110 and the leakage prevention protrusion 220, has a shape bent a plurality of times. That is, even when a welding defect occurs, since the adhesion surface of the main body 100 and the sealing cover 200 has the bent shape, electrolyte is maximally prevented from leaking out of the main body 100.

### <Second embodiment for adhesion surface>

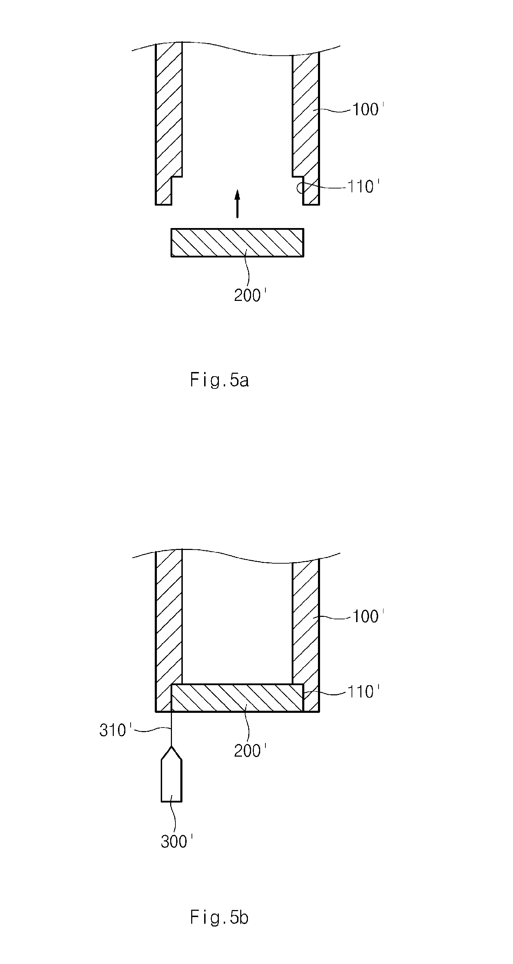

Referring to FIG. 5A, a step (c") of forming an adhesion recess 110' in a main body 100' is provided after the step (c). The adhesion recess 110' is formed by cutting an open end of the main body 100' from the outside of the main body 100' to the inside thereof, and has a portion that is open to the outside of the main body 100'. As described above, the adhesion recess 110' is formed through the cutting, but the present invention is not limited thereto.

When the main body 100' has the adhesion recess 110' in the open end as described above, a sealing cover 200' is formed into a shape corresponding to the adhesion recess 110' in the step (d).

The sealing cover 200' formed into the shape corresponding to the adhesion recess 110' of the main body 100' is inserted into the adhesion recess 110' . After that, as illustrated in FIG. 5B, the step (e) of adhering the main body 100' and the sealing cover 200' to each other by emitting a laser beam 310' between the main body 100' and the sealing cover 200' from a laser welder 300' is performed.

In the method of manufacturing the prismatic type battery case according to the present invention, configured as described above, the main bodies 100 and 100' of the prismatic type battery case are manufactured through the extrusion process and the drawing processes, so that the main bodies 100 and 100' have the desired thickness, and a crack is prevented from being formed therein, thereby decreasing a defect rate.

In addition, the heat treatment is performed on the hollow material 60 after each drawing process, so as to decrease the hardness and strength of the hollow material 60 and improve formability thereof, thereby preventing a defect from occurring in a subsequent drawing process.

In addition, the leakage prevention recess and the leakage prevention protrusion are formed on the main body 100 and the sealing cover 200, thereby preventing electrolyte from leaking out of the battery case.

Methods of manufacturing a prismatic type battery case have been described according to the forgoing exemplary embodiments of the present invention.

The foregoing embodiments should be considered in descriptive sense only and not for purposes of limitation. Therefore, the scope of the invention is defined not by the detailed description of the invention but by the appended claims. In addition, it should be understood that other equivalents and modifications could be made to the appended claims without departing from the spirit or scope of the invention.

## Claims

1. A method of manufacturing a prismatic type battery case, comprising:
extruding a raw material into a prismatic hollow material having both open ends (Step (a));
drawing the hollow material a plurality of times so as to have a desired thickness (Step (b));
manufacturing a main body by cutting the drawn hollow material to a predetermined length (Step (c));
forming a sealing cover having a shape corresponding to an open end of the main body (Step (d)); and
adhering the sealing cover to the open end of the main body (Step (e)).

2. The method of claim 1, wherein Step (e) is performed through laser welding.

3. The method of claim 1, wherein in Step (b), a change in thickness of the hollow material in each of drawing processes ranges from 15% to 25%.

4. The method of claim 1, further comprising performing a heat treatment on the drawn hollow material after each of drawing processes in Step (b) (Step (b')).

5. The method of claim 4, wherein Step (b') is not performed after the final drawing process of the drawing processes.

6. The method of claim 4, wherein the heat treatment on the drawn hollow material in Step (b') is performed through annealing.

7. The method of claim 1, further comprising:
forming a leakage prevention recess in the open end of the main body after Step (c) (Step (c')); and
forming a protruding part and a leakage prevention protrusion after Step (d) (Step (d')), wherein the protruding part is introduced from the sealing cover into the open end of the main body, and the leakage prevention protrusion is formed on a side surface of the protruding part.

8. The method of claim 7, further comprising inserting the leakage prevention protrusion into the leakage prevention recess by introducing the protruding part of the sealing cover into the main body before Step (e) (Step (e')).

9. The method of claim 1, further comprising forming an adhesion recess in the open end of the main body after Step (c) (Step (c")),
wherein the sealing cover is inserted into the adhesion recess of the main body and is then adhered to the open end of the main body in Step (e).

10. The method of claim 1, wherein the main body and the sealing cover are formed of any one selected from aluminum (Al), copper (Cu), iron (Fe), stainless steel (SUS), a ceramic, a polymer, and an equivalent thereof.

11. A prismatic type battery case manufactured according to the method of any one of claims 1 to 10.
